# FASCICULE DE BREVET EUROPEEN

(11) **EP 2 593 208 B1**
(45) Date de publication et mention de la délivrance du brevet: **20.04.2016**
(21) Numéro de dépôt: 11730325.5
(22) Date de dépôt: 11.07.2011
(51) Int. Cl.: B01D 46/00, B01D 46/52

(54) **FILTRE MICROBICIDE ET CARTOUCHE FILTRANTE INCORPORANT UN TEL FILTRE**
MIKROBIZIDES FILTER UND FILTEREINSATZ MIT EINEM DERARTIGEN FILTER
MICROBICIDAL FILTER AND FILTER CARTRIDGE INCORPORATING SUCH A FILTER

(30) Priorité: 12.07.2010 FR 1055651
(43) Date de publication de la demande: 22.05.2013
(73) Titulaire: L'Industrielle du Ponant, 29800 Plouedern (FR)
(72) Inventeur: KADDOUR, Stéphane, F-29800 Landerneau (FR)
(74) Mandataire: Le Guen-Maillet
(86) Numéro de dépôt international: PCT/EP2011/061715
(87) Numéro de publication internationale: WO 2012/007408

(56) Documents cités:
- EP-A1- 1 952 869
- WO-A1-00/25833
- US-A- 5 639 452

## Description

La présente invention se rapporte à un filtre microbicide pour le traitement de l'air, une cartouche de filtration comprenant un tel filtre.

On connaît, à la lecture du document US-B-4 323 374, un filtre pour salles blanches et hôpitaux. Il se compose dans une configuration préférentielle, d'un filtre HEPA conformé en zigzag, en aval duquel est placée une couche de filtration fabriquée en fibres de polypropylène à propriété électrostatique. La couche amont HEPA retient les particules, les microbes de taille inférieure à 0.3 micromètres. La couche aval retient une grande quantité de particules de taille inférieure à 0.111 micromètres. Des écarteurs sont placés entre les plis d'un élément plissé pour séparer ses pans. Les avantages mis en avant sont une grande efficacité et un faible encrassement.

Les particules vivantes piégées par le filtre HEPA demeurent cependant vivantes et peuvent contaminer l'air, en particulier pendant l'opération de remplacement du filtre, si bien que la personne qui effectue ce travail est exposée à un risque sanitaire. Par ailleurs, des écarteurs doivent être placés dans le creux des plis pour éviter le collapsus de l'élément plissé.

On connaît encore à la lecture du document WO-A1-0025833, un filtre destiné à être utilisé dans les hôpitaux. Il se compose de trois couches superposées et plissées en zigzag. La couche extérieure et la couche intérieure comprennent une résine d'agent désinfectant (résine d'échange d'anions iodée de base forte). La couche intermédiaire, placée entre les deux autres, est constituée d'un filtre HEPA. La couche extérieure et la couche intérieure sont constituées d'un support fibreux non-tissé perméable à l'air.

Le but de l'invention est donc de proposer un filtre microbicide ainsi qu'une cartouche incorporant un tel filtre qui soit inoffensif pendant son remplacement, son traitement en temps que déchet, qui soit d'une construction stable dans le temps et à moindre coût.

A cet effet, est proposé un filtre microbicide pour le traitement de l'air, du type comprenant dans le sens dévolu d'écoulement de la veine d'air susceptible de le traverser, une couche de filtration, un filtre HEPA ; selon l'invention la couche de filtration contient un agent bactéricide et/ou fongicide, et le filtre HEPA est plissé en étant appliqué contre une seconde couche de filtration plissée disposée en aval, de manière à éviter la mise en contact mutuelle de ses plis.

La conjugaison de l'action de la couche imprégnée et du filtre HEPA permet d'inhiber ou de tuer par contact toutes les particules vivantes qui pénètrent dans le filtre microbicide.

Le filtre HEPA est maintenu appliqué de manière stable dans sa géométrie plissée contre la seconde couche de filtration, si bien que les performances de filtration ne s'altèrent que progressivement.

Selon une caractéristique additionnelle de l'invention, la première couche de filtration est plissée, le filtre HEPA étant maintenu dans sa géométrie plissée entre les deux couches de filtration.

L'efficacité de l'action de la couche imprégnée est accrue du fait qu'elle jouxte le filtre HEPA, l'agent bactéricide et/ou fongicide pouvant aussi diffuser jusqu'au filtre HEPA dans l'interstice qui les sépare pour inhiber ou tuer les particules vivantes retenues sur le filtre HEPA. Par ailleurs, le filtre HEPA est interposé, au moins localement entre les deux couches de filtration, si bien qu'il ne se déforme pas à l'usage et procure au filtre une évolution de ses performances dans le temps qui est prévisible.

Selon une caractéristique additionnelle de l'invention, la hauteur (h) de la première couche de filtration est comprise entre 20 % et 50 % de la hauteur (H) du filtre microbicide.

La durée de vie du filtre microbicide est accrue en évitant le collapsus du filtre HEPA. Par ailleurs, l'évolution de l'encrassement du filtre demeure relativement faible.

Selon une caractéristique additionnelle de l'invention, le filtre microbicide comprend une couche support placée en aval, la couche support bénéficiant d'un traitement anti COV (Composés Organiques Volatils).

Le filtre capte également la quasi-totalité des molécules chimiques volatiles.

Selon une caractéristique additionnelle de l'invention, la première couche, la seconde couche, incorporent des fibres de polypropylène sur lesquelles ont été injectées des particules ion/argent.

Les fibres de polypropylène sont disposées sous la forme d'un média en trois dimensions et possèdent de la sorte un pouvoir filtrant remarquable. Les particules ion/argent ont un effet destructeur sur les particules vivantes.

L'invention couvre également une cartouche de filtration incorporant un tel filtre microbicide.

Selon une caractéristique additionnelle de l'invention, la cartouche de filtration est de type cylindrique.

Selon une caractéristique additionnelle de l'invention, la cartouche de filtration est de type prismatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'une cartouche de filtration de type cylindrique selon l'invention,
la Fig. 2 représente une vue en perspective d'une cartouche de filtration de type prismatique selon l'invention et,
la Fig. 3 représente une vue en coupe d'un filtre microbicide pour une cartouche de filtration de type prismatique selon l'invention.

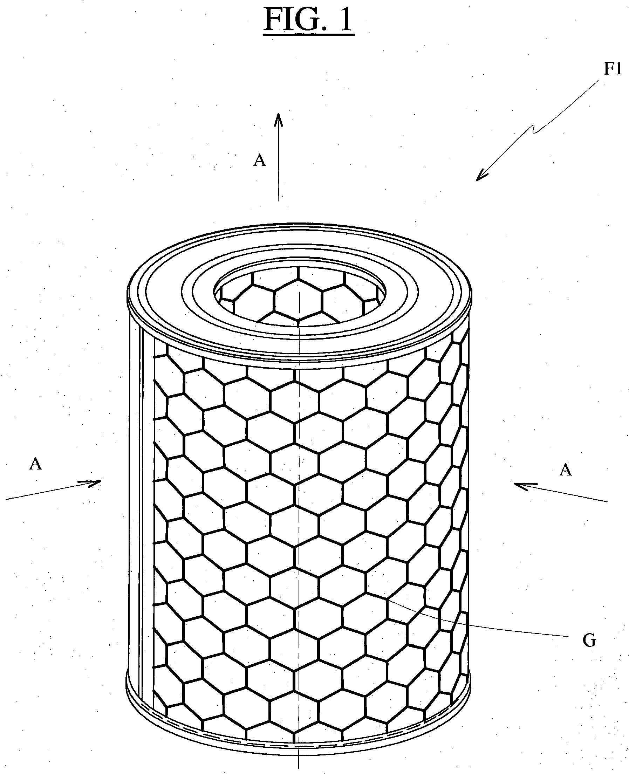

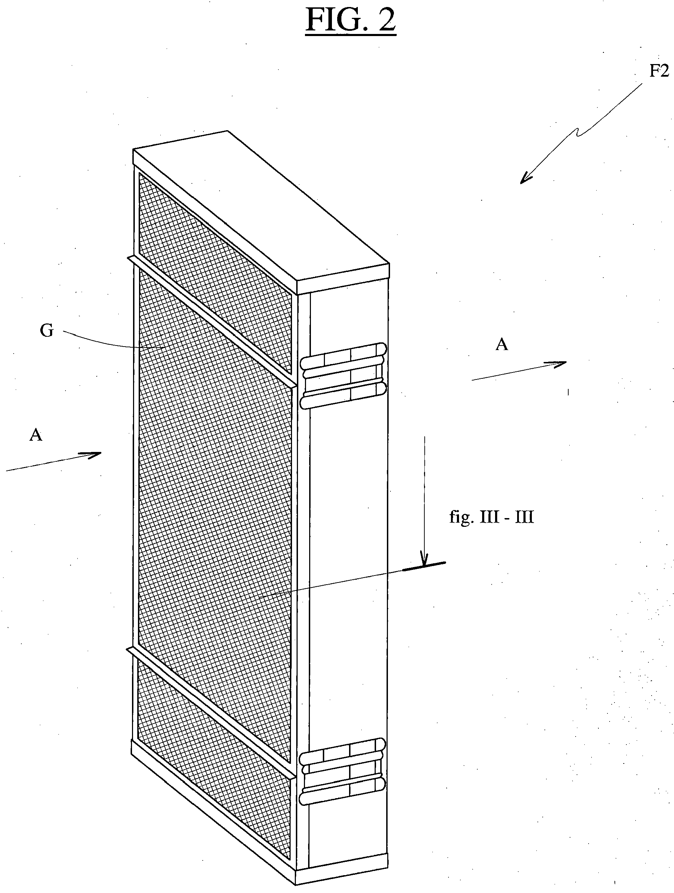

La cartouche de filtration F présentée sur les Figs. 1 et 2 est destinée à être placée dans un circuit de traitement de l'air pour l'épurer des poussières en suspension qu'il contient, mais aussi, retenir les particules pathogènes de tailles plus faibles, comme les bactéries, les germes, les microbes, les virus. Elle est également efficace pour retenir et annihiler les molécules chimiques volatiles.

Son application couvre le domaine de la filtration dans les cabines d'aéronefs, dans les véhicules, dans les salles médicales, le domaine de la ventilation mécanique contrôlée dans les habitations, et de manière générale, tous les secteurs d'activité nécessitant un air exempt de pollution microbienne ou chimique.

Elle comprend, sur la Fig. 1 et sous la référence F1, un châssis cylindrique et, sur la Fig. 2 et sous la référence F2, un châssis parallélépipédique, pour qu'elle puisse être raccordée suivant les principaux standards actuels.

Dans la première configuration de raccordement, le flux d'air, matérialisé par la flèche A, la traverse en périphérie pour ressortir par un côté de la cartouche. Dans la seconde configuration, le flux d'air A la traverse dans le sens de son épaisseur.

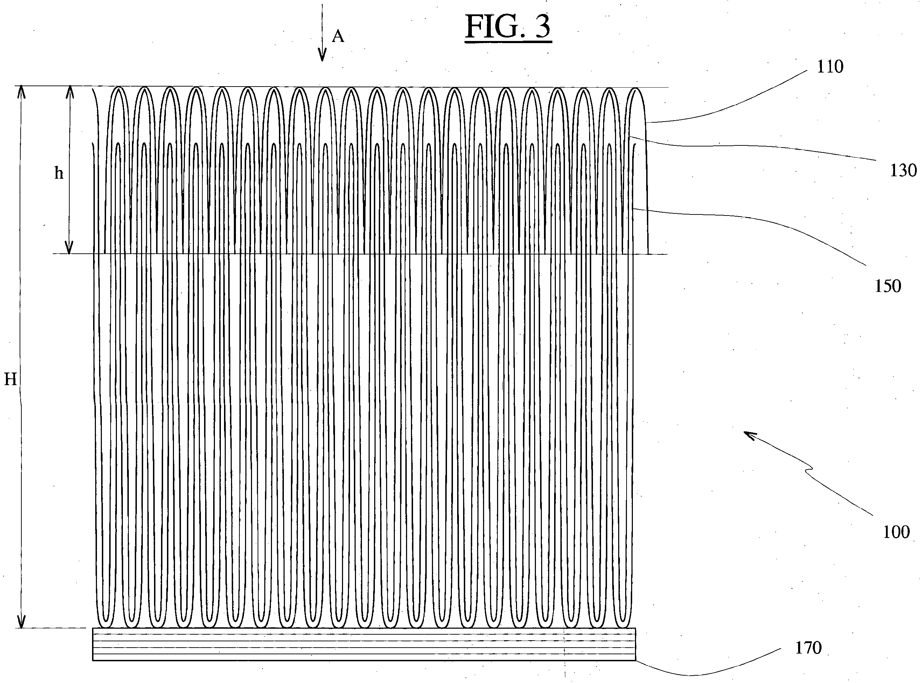

La cartouche F incorpore un filtre microbicide d'une structure particulière, qui est présenté sur la Fig. 3. Sa construction le rend plus efficace dans la mesure où aucune particule dangereuse n'est larguée en aval. Aucune particule vivante, telles que les bactéries, les germes, les microbes et autres virus, ne subsistent sur ses éléments de filtration, même quand ils sont recouverts de poussières et/ou qu'ils sont colmatés. Le remplacement de la cartouche est plus sécurisé que celui des cartouches connues de l'art antérieur car il n'expose pas le personnel de maintenance à un risque de contagion par des bactéries et autres virus qu'il contient susceptible de provoquer, par exemple, des maladies de la peau. Le traitement de la cartouche usagée est également plus facile à mettre en oeuvre.

Le filtre microbicide 100 se compose d'amont en aval de son sens de filtration, symbolisé par la flèche A, d'une première couche de filtration 110, d'un filtre HEPA 130 (acronyme de High Efficiency Particulate Air, en langue anglaise), d'une seconde couche de filtration 150, et d'une couche support 170 également traitée pour retenir, annihiler, les molécules chimiques à l'état gazeux.

Les trois éléments 110, 130 et 150, situés les plus en amont sont plissés, si bien que le filtre HEPA 130 est intercalé entre les deux couches 110 et 150 qui forment de la sorte des écarteurs pour maintenir parfaitement en place le filtre intermédiaire HEPA, typiquement plus souple, pendant la durée de service de la cartouche.

La première couche de filtration 110 est constituée d'un élément filtrant tissé dans les trois dimensions, fabriqué en polypropylène. Il est destiné à retenir les plus grosses poussières, dont la taille est supérieure à 1 µm. Des particules de type ion/argent ont été injectées dans les fibres, qui présentent alors une action désinfectante sur les particules vivantes pathogènes retenues ou susceptibles de traverser cette première couche. Les bactéries adsorbées sont détruites ou inhibées par l'action combinée de l'argent et des atomes d'oxygène adsorbés sur le métal. L'argent sert d'une part à empêcher le développement des microorganismes et d'autre part à catalyser leur oxydation destructive. Il incorpore également un agent bactéricide et/ou fongicide tel que le triclosan ® apte à tuer, dans un environnement proche, les particules pathogènes.

Le filtre HEPA 130 est fabriqué en une trame faite de papier et qui incorpore des fibres de verre. La trame peut encore être faite de fibres tissées fabriquées en polypropylène.

Ses caractéristiques de filtration sont définies, notamment, par la norme EN 1822. Il est conçu pour retenir les particules de taille supérieure à 0.1µm avec une efficacité supérieure à 99 %.

La première couche de filtration 110 et le filtre HEPA 130 forment un système capable de tuer la quasi-totalité des particules pathogènes dans la mesure où ces particules pathogènes qui parviennent à franchir vivantes la première couche de filtration 110 sont retenues par le filtre HEPA et sont annihilées dans une période de temps comprise entre quelques minutes et quelques heures sous l'effet de la diffusion de l'agent bactéricide et fongicide dans le volume fermé existant entre ces deux couches.

On remarquera que la première couche de filtration 110 est, dans une variante de fabrication non représentée, non plissée. L'encrassement de cette première couche intervient certes plus rapidement, mais demeure cependant efficace pour tuer les particules vivantes qui y sont interceptées.

La seconde couche de filtration 150, outre qu'elle maintient parfaitement dans sa configuration plissée le filtre HEPA, en évitant que ses plis ne s'affaissent sur eux mêmes, apporte deux fonctionnalités intéressantes.

La structure de cette seconde couche de filtration 150 est identique à celle de la première couche.

Elle détruit les particules pathogènes de très petites tailles qui auraient pu franchir vivantes la barrière du filtre HEPA, grâce à la présence des particules de type ion/argent et de l'agent bactéricide et fongicide qu'elle contient. Les particules pathogènes susceptibles d'être contenues dans cette seconde couche de filtration 150 sont donc vouées à mourir. Les particules pathogènes retenues dans la première couche de filtration 110 sont également tuées et sont donc inoffensives. Aussi, le filtre microbicide peut être manipulé sans danger, c'est-à-dire sans risque pour la personne qui intervient d'être contaminée. Son recyclage est également moins contraignant à réaliser.

La couche support 170 est d'une configuration non plissée pour servir d'assise dans la cartouche aux couches de filtration amont. Elle est aussi conçue pour retenir les molécules chimiques à l'état gazeux.

Elle se présente sous la forme d'une structure plane, dans une cartouche de type parallélépipède et d'une structure cylindrique, dans une cartouche de type cylindrique. Elle est fabriquée dans le même matériau que les couches 110 et 150, c'est-à-dire à partir d'éléments filtrants tissés, fabriqués en polypropylène, incorporant un agent bactéricide/fongicide. Son épaisseur est cependant plus importante. Elle provient d'une superposition de plusieurs couches d'éléments filtrants tissés et qui sont également issus d'un traitement, par exemple à base d'un agent qui libère des anions, destiné à annihiler les molécules gazeuses. Elle est constituée de cinq couches sur cette Fig. 3. Sa structure plus épaisse est efficace pour inhiber les gaz en allongeant la durée de leur transit. Elle agit dès lors comme un filtre anti odeur, appelé encore filtre chimique COV (Composés Organiques Volatils).

Les différentes couches 110, 150 et 170 sont, dans un mode de fabrication intéressant, des éléments qui peuvent être commercialisés par la société NOVEKO ou encore par d'autres sociétés.

Les différentes couches 110, 150 et 170 sont fabriquées, à la base, dans la même matière, si bien que seulement deux matières entrent dans la construction du filtre microbicide 100.

La fabrication du filtre microbicide 100 se présente de la manière suivante. On chauffe, par exemple à l'aide de chauffage radiant, la première couche de filtration 110, puis on la plisse sur une hauteur h comprise entre 20 % et 50 % de la hauteur H totale de la zone plissée du filtre microbicide. Cette géométrie procure une efficacité de filtration intéressante avec une évolution relativement lente de son colmatage du fait de son effet écarteur. Une hauteur h voisine de 30 % de la hauteur H représente un compromis intéressant. Les performances aérauliques obtenues sont sensiblement supérieures à celles des filtres connus.

On chauffe et l'on plisse le filtre HEPA 130. On chauffe et l'on plisse la seconde couche de filtration 150. La hauteur de plissage de la seconde couche de filtration 150 est inférieure à celle du filtre HEPA 130.

On imbrique mutuellement les trois couches filtrantes de manière à former une structure plissée dans laquelle les plis du filtre HEPA 130 demeurent interposés, côté amont, entre les plis de la première couche de filtration 110 et côté aval entre les plis de la seconde couche de filtration 150.

La présence de la seconde couche de filtration 150 évite aux plis du filtre HEPA 130 de se toucher lorsqu'un flux d'air est admis au travers de ce dernier. On évite la rétraction du filtre HEPA 130 et de manière générale, le « collapsus », terme usité de la langue anglaise, du filtre.

On obtient dès lors une structure filtrante caractérisée par des performances aérauliques satisfaisantes et qui ne s'amenuisent que lentement et de manière prévisible au fil de l'encrassement de la cartouche de filtration.

Cette structure plissée est accolée à une couche support 170 de dimension adéquate, puis l'ensemble est inséré dans le châssis d'une cartouche de filtration en amont d'une grille G de retenue, dans une configuration plane pour une cartouche de filtration de type prismatique et dans une configuration cylindrique pour une cartouche de filtration de type cylindrique.

La cartouche de filtration de l'invention évite le relarguage de particules vivantes. Son remplacement dans le cadre d'une opération de maintenance supprime le risque éventuel de contamination par le personnel d'entretien. Le recyclage de la cartouche est moins contraignant à mettre en oeuvre. La géométrie de sa structure demeure stable dans le temps, gage de performances prédictibles, sans faire usage de séparateurs, d'écarteurs dédiés, typiquement formés de plaques ou de cordons de colle. Elle est facile et relativement peu coûteuse à fabriquer.

## Revendications

1. Filtre microbicide (100) pour le traitement de l'air, du type comprenant dans le sens (A) dévolu d'écoulement de la veine d'air susceptible de le traverser, une première couche de filtration, un filtre HEPA, une seconde couche de filtration (150), la première couche de filtration (110) contenant un agent bactéricide et/ou fongicide, le filtre HEPA (130) étant plissé en étant appliqué contre la seconde couche de filtration (150) également plissée et disposée en aval, **caractérisé en ce que** la première couche de filtration (110), la seconde couche de filtration (150), sont constituées d'un élément filtrant tissé dans les trois dimensions, fabriqué en fibres de polypropylène.

2. Filtre microbicide (100) selon la revendication 1, **caractérisé en ce que** la première couche de filtration (110) est plissée, le filtre HEPA (130) étant maintenu dans sa géométrie plissée entre les deux couches de filtration (110, 150) de manière à éviter la mise en contact mutuelle des plis dudit filtre HEPA.

3. Filtre microbicide (100) selon la revendication 2, **caractérisé en ce que** la hauteur (h) des plis de la première couche de filtration (110) est comprise entre 20 % et 50 % de la hauteur (H) des plis du filtre microbicide (100).

4. Filtre microbicide (100) selon la revendication 1, 2 ou 3, **caractérisé en ce qu'**il comprend une couche support (170) placée en aval, la couche support bénéficiant d'un traitement anti COV (Composés Organiques Volatils).

5. Filtre microbicide (100) selon l'une quelconque des revendications 1 à 4, **caractérisé en ce que** des particules ion/argent ont été injectées dans les fibres de polypropylène de la première couche (110) de filtration, de la seconde couche (150) de filtration.

6. Cartouche de filtration (F), **caractérisée en ce qu'**elle incorpore un filtre microbicide (100) selon l'une quelconque des revendications précédentes.

7. Cartouche de filtration (F1), selon la revendication 6, **caractérisée en ce qu'**elle est de type cylindrique.

8. Cartouche de filtration (F2), selon la revendication 6, **caractérisée en ce qu'**elle est de type prismatique.

## Patentansprüche

1. Mikrobizider Filter (100) für die Aufbereitung von Luft, der in Durchflussrichtung (A) des Luftstroms, der den Filter durchqueren kann, eine erste Filterschicht, einen HEPA-Filter und eine zweite Filterschicht (150) umfasst, wobei die erste Filterschicht (110) ein bakterizides und/oder fungizides Mittel enthält, der HEPA-Filter (130) dadurch plissiert wird, dass er gegen die ebenfalls plissierte und stromabwärts angeordnete zweite Filterschicht (150) angelegt ist, **dadurch gekennzeichnet, dass** die erste Filterschicht (110) und die zweite Filterschicht (150) aus einem, aus Polypropylenfasern hergestellten, filtrierenden, dreidimensionalen Element bestehen.

2. Mikrobizider Filter (100) nach Patentanspruch 1, **dadurch gekennzeichnet, dass** die erste Filterschicht (110) plissiert ist, wobei der HEPA-Filter in seiner plissierten Geometrie zwischen den beiden Filterschichten (110, 150) derart gehalten ist, dass die Plissierfalten des genannten HEPA-Filters nicht miteinander in Berührung kommen.

3. Mikrobizider Filter (100) nach Patentanspruch 2, dadurch gekennzeichent, dass die Höhe (h) der Plissierfalten der ersten Filterschicht (110) zwischen 20 und 50% der Höhe (H) der Plissierfalten des mikrobiziden Filters (100) liegt.

4. Mikrobizider Filter (100) nach Patentanspruch 1, 2 oder 3, **dadurch gekennzeichnet, dass** er eine stromabwärts platzierte Trägerschicht (170) umfasst, wobei der Trägerschicht eine Behandlung gegen VOC (flüchtige organische Stoffe) zuteil wurde.

5. Mikrobizider Filter (100) nach einem der Patentansprüche 1 bis 4, **dadurch gekennzeichnet, dass** in die Polypropylenfasern der ersten Filterschicht (110) und der zweiten Filterschicht (150) Ion/Silber-Partikel eingespritzt wurden.

6. Filterpatrone (F), **dadurch gekennzeichnet, dass** sie einen mikrobiziden Filter (100) nach einem der vorhergehenden Patentansprüche beinhaltet.

7. Filterpatrone (F1) nach Patentanspruch 6, **dadurch gekennzeichnet, dass** sie zylindrisch ist.

8. Filterpatrone (F2) nach Patentanspruch 6, **dadurch gekennzeichnet, dass** sie prismatisch ist.

## Claims

1. A microbicidal filter (100) for air treatment comprising, in an allocated direction of flow (A) of an airstream liable to pass through the filter,
a first filtration layer (110),
a HEPA filter (130),
a second filtration layer (150),
wherein the first filtration layer (110) contains a bactericidal and/or fungicidal agent and the HEPA filter (130) is pleated while being applied against the second filtration layer (150), said second filtration layer (150) being also pleated and placed downstream,
**characterized in that** the first filtration layer (110) and the second filtration layer (150) consist of a filter element woven in three dimensions, made of polypropylene fibers.

2. The microbicidal filter (100) according to claim 1, wherein the first filtration layer (110) is pleated and the HEPA filter (130) is held in its pleated geometry between the first and second filtration layers (110, 150) so as to prevent the mutual contact of said HEPA filter (130) pleats.

3. The microbicidal filter (100) according to claim 2, wherein a height (h) of the pleats of the first filtration layer (110) is between 20% and 50% of a height (H) of the pleats of the microbicidal filter (100).

4. The microbicidal filter (100) according to claim 1, 2 or 3, further comprising a support layer (170) placed downstream, and the support layer comprising an anti-VOC (Volatile Organic Compound) treatment.

5. The microbicidal filter (100) according to claims 1 to 4, wherein ion/silver particles have been injected into the polypropylene fibers of the first filtration layer (110) and into the polypropylene fibers of the second filtration layer (150).

6. A filtration cartridge (F), incorporating a microbicidal filter (100) according to claims 1 to 5.

7. The filtration cartridge (F1) according to claim 6, wherein the filtration cartridge is cylindrical.

8. The filtration cartridge (F2) according to claim 6, wherein the filtration cartridge is prismatic.
